(19) Europäisches Patentamt
European Patent Office
Office européen des brevets

(11) **EP 3 733 818 B1**

(12) **EUROPEAN PATENT SPECIFICATION**

(45) Date of publication and mention
of the grant of the patent:
**01.02.2023 Bulletin 2023/05**

(21) Application number: **18894438.3**

(22) Date of filing: **21.12.2018**

(51) International Patent Classification (IPC):
*C10B 41/00* (2006.01)   *C10B 43/00* (2006.01)
*G01D 21/02* (2006.01)   *G01F 23/00* (2022.01)
*G01F 17/00* (2006.01)   *G01H 17/00* (2006.01)
*G05B 13/04* (2006.01)   *C21B 5/00* (2006.01)
*C21B 7/24* (2006.01)   *F27B 1/20* (2006.01)
*F27B 1/28* (2006.01)   *F27D 3/00* (2006.01)
*F27D 21/00* (2006.01)

(52) Cooperative Patent Classification (CPC):
**C21B 5/008; C21B 7/24; F27B 1/20; F27B 1/28;
F27D 3/0033; F27D 21/0035; G01D 21/02;
G01F 17/00; G01F 23/00; G01H 17/00;
G05B 13/04;** F27D 2003/0063; F27D 2021/0042

(86) International application number:
**PCT/KR2018/016534**

(87) International publication number:
**WO 2019/132458 (04.07.2019 Gazette 2019/27)**

(54) **ATTACHED ORE MEASURING DEVICE FOR COKE BIN**

VORRICHTUNG ZUM MESSEN DES ERZES EINES KOKSBEHÄLTERS

DISPOSITIF DE MESURE DE MINERAI LIÉ POUR BAC À COKE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.12.2017   KR 20170180277**

(43) Date of publication of application:
**04.11.2020   Bulletin 2020/45**

(73) Proprietor: **POSCO Holdings Inc.
Seoul 06194 (KR)**

(72) Inventors:
• **KIM, Do-Hun
Pohang-si Gyeongsangbuk-do 37877 (KR)**
• **LEE, Jin-Hwi
Pohang-si Gyeongsangbuk-do 37877 (KR)**
• **HONG, Seong-Bu
Pohang-si Gyeongsangbuk-do 37877 (KR)**
• **KANG, Tae-Wook
Pohang-si Gyeongsangbuk-do 37877 (KR)**

• **MIN, Cheol-Gi
Pohang-si Gyeongsangbuk-do 37877 (KR)**
• **JUNG, Chul-Woo
Gyeongsangbuk-do 37877 (KR)**
• **PARK, Chul-Woo
Pohang-si Gyeongsangbuk-do 37877 (KR)**
• **KIM, Seok-Woong
Pohang-si Gyeongsangbuk-do 37877 (KR)**
• **LEE, Ung-Gil
Pohang-si Gyeongsangbuk-do 37877 (KR)**

(74) Representative: **Zech, Stefan Markus
Meissner Bolte Patentanwälte
Rechtsanwälte Partnerschaft mbB
Postfach 86 06 24
81633 München (DE)**

(56) References cited:
**WO-A1-2018/117731     KR-A- 20020 048 558
KR-A- 20030 055 024     KR-A- 20040 042 319
KR-A- 20050 064 732     KR-A- 20090 033 654
KR-B1- 100 864 446     KR-B1- 101 658 180**

## Description

[Technical Field]

The present disclosure relates to an attached ore-measuring device for a coke bin, configured to measure ore inside the coke bin.

[Background Art]

In general, coke and iron ore (sintered ore + sized ore), used as raw material, are charged in a furnace, and coal is crushed and blown into the furnace as pulverized coal. The pulverized coal is then combusted with the coke due to high temperature hot air to generate a reducing gas, thereby reducing fusing the iron ore.

To allow the iron ore and the coke to be charged in the furnace, the raw material and fuels transferred during a previous process are temporarily stored in a bin, a storage of a blast furnace for a raw material, and an amount required in the furnace is inevitably weighed. Ores crushed to a certain size in a raw material-treating facility during the above process and those selectively treated and delivered are stored in the bin of the blast furnace and accumulated to be fixed (become "attached ore") on a surface of a fixed liner integrally installed inside the bin due to adhesion to each other, self-containing moisture and fine particles among the sized ore. This may result in a reduction in an ore storage area inside the bin and clogging of an ore outlet, ultimately leading to a problem that weighing is impossible. In this regard, it is necessary to examine a state of the attached ore inside the coke bin.

The above conventional art can be easily understood based on WO 2018/117731 A1, KR 2004 0042319 A, KR 101 658 180 B1, Korean Laid-Open Publication Nos. 10-2001-0064149, 10-2003-0044377, 10-2005-0064732, and the like.

[Disclosure]

[Technical Problem]

According to the present invention, an attached ore-measuring device for a coke bin, capable of estimating a state of the attached ore inside a bin through a level variation of the coke bin, is provided.

[Technical Solution]

To solve the technical problem of the present invention, the attached ore-measuring device for a coke bin according to appended claims 1-8 is disclosed.

[Advantageous Effects]

According to the present invention, information of an attached ore state of a coke bin is provided to contribute to accurate calculation of a stable reserve quantity of the coke bin and facilitate prevision of narrowing or blocking of gate opening of the coke bin and prediction of a coke charging point. Accordingly, a coke supply operation is proceeded with for preventing the same, thereby securing operational stability of a blast furnace.

[Description of Drawings]

FIG. 1 is a schematic view of a configuration of an attached ore-measuring device for a coke bin according to an example embodiment of the present invention.

FIG. 2 is a graph illustrating measurement data of a coke volume measurement unit of a coke bin according to an example embodiment.

FIGS. 3A and 3B are graphs illustrating a CHARGE AMOUNT of an attached ore-measuring device for a coke bin and level decrease data of the corresponding coke bin according to an example embodiment.

FIGS. 4A and 4B are graphs illustrating occurrence of discharging of an attached ore-measuring device for a coke bin and data of a level decrease of a corresponding coke bin according to an example embodiment.

FIGS. 5A to 5C are graphs illustrating data of a level increase for each coke bin.

FIGS. 6A to 6C are graphs illustrating data of a level decrease for each coke bin.

FIGS. 7A to 7C are diagrams illustrating a state of attached ore of an attached ore-measuring device for a coke bin according to an example embodiment.

FIGS. 8 and 9 are flow charts illustrating operations of a coke bin level measurement unit of an attached ore-measuring device for a coke bin according to an example embodiment.

FIGS. 10 to 18 are flow charts illustrating operations of each element of an attached ore-measuring device for a coke bin according to an example embodiment.

[Best Mode for Invention]

Hereinafter, preferred example embodiments will be described in detail with reference to the accompanying drawings to enable one of ordinary skill in the art to easily practice the invention.

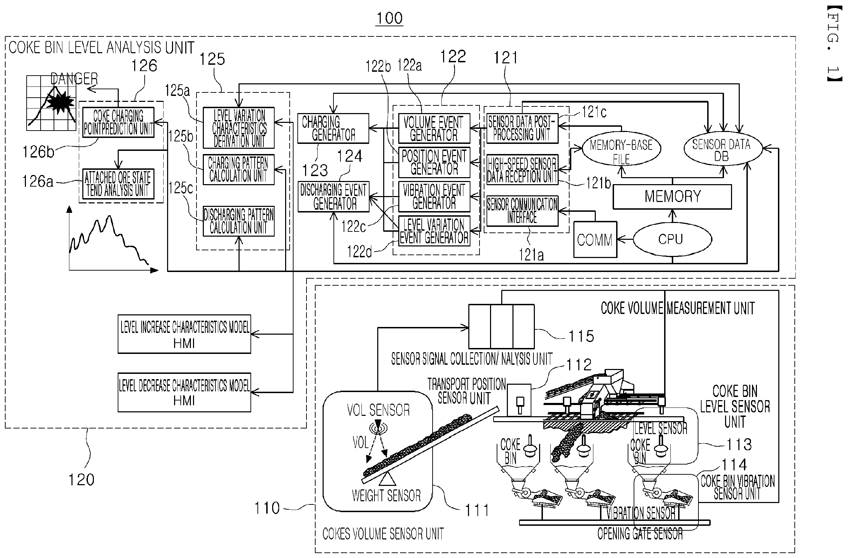

FIG. 1 is a schematic view of a configuration of an attached ore-measuring device for a coke bin according to an example embodiment of the present invention.

Referring FIG. 1, an attached ore-measuring device 100 for a coke bin according to the claimed invention includes a coke volume measurement unit 110 and a coke bin level analysis unit 120.

The coke volume measurement unit 110 measures volumes of coke charged in and discharged from a plurality of coke bins.

The coke volume measurement unit 110 includes a coke volume sensor unit 111, a transport position sensor unit 112, a coke bin level sensor unit 113, a coke bin vibration sensor unit 114, and a sensor signal collection/analysis unit 115.

The coke volume sensor unit 111 can measure an amount of coke passing a belt conveyer connected to a coke bin using a volume sensor, a weight sensor, or the like, and can be used to determine which coke bin each portion of the coke volume is transferred to by managing the same as time series data. A level meter or a 2D cross-sectional area meter can be used as the volume sensor.

The transport position sensor unit 112 can measure which coke bin a tripper car remains stationary in. The coke transported by the belt conveyer may b stored in the coke bin in which the tripper car is positioned.

The coke bin level sensor unit 113 can measure a reserve amount of the coke stored in the coke bin generally in terms of a percentage (%) or a length.

The coke bin vibration sensor unit 114 can measure as to whether the coke has been discharged through vibration of a vibrator of each coke bin.

The sensor signal collection/analysis unit 115 can collect and analysis data measured in the coke volume sensor unit 111, the transport position sensor unit 112, the coke bin level sensor unit 113 and the coke bin vibration sensor unit 114 for a predetermined period of time and analyze data collected in each sensor unit using a big data method. For example, the sensor signal collection/analysis unit 115 can collect one-year data measured from each sensor unit and store the same in a database. Further, the data can synchronize a time and store the same in the database such that the data measured from each sensor can be linked and analyzed.

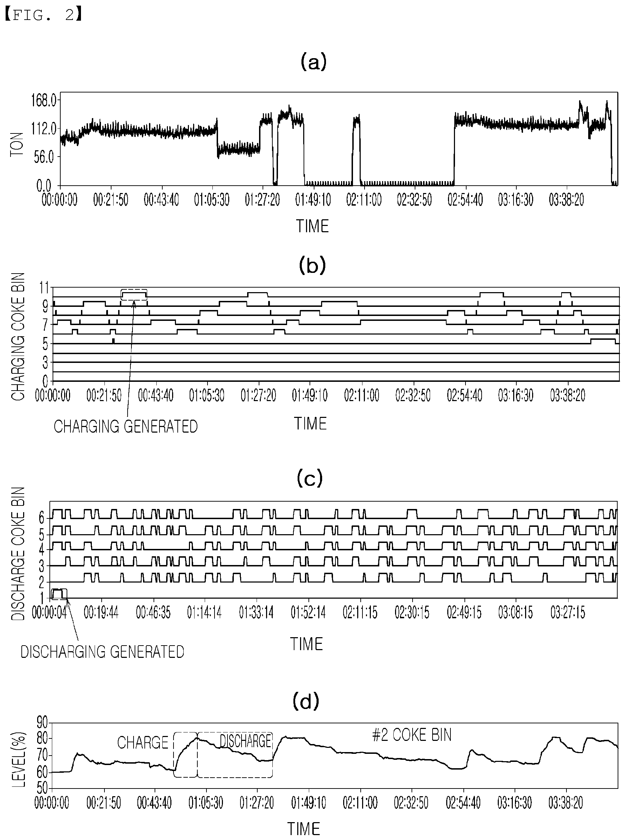

FIG. 2 is a graph illustrating measurement data of a coke volume measurement unit of a coke bin according to an example embodiment.

Referring to FIG. 2A together with FIG. 1, a quantity of coke being transported by a belt conveyer, is observed to be measured by a volume sensor or a weight sensor of the coke volume sensor unit 111.

Referring to FIG. 2B together with FIG. 1, a position as to which coke bin a volume of the coke being transported is charged in is observed to be measured by the transport position sensor unit 112.

Referring to FIG. 2C together with FIG. 1, the coke bin vibration sensor unit 114 is observed to measure a time point at which vibration occurs for a discharge of each coke bin. For example, in the case of the coke bin vibration sensor unit 114 having 6 coke bins as illustrated, a location in which a vibration occurs for each coke bin is observed.

Referring to FIG. 2D together with FIG. 1, the coke bin level sensor unit 113 is observed to measure a level change of the coke exhibited when the transported coke is charged in or discharged from each coke bin.

That is, referring to FIG. 1, the coke bin level analysis unit 120 derives a coke level variation characteristics model for each coke bin in accordance with measurement results of the coke charged in a plurality of the coke bins and discharged from a plurality of the coke bins and calculate a state of attached ore of each coke bin.

The coke bin level analysis unit 120 may include an interface unit 121, an event generator 122, a charging event generator 123, a discharging event generator 124, a calculation unit 125 and an analysis unit 126.

The interface unit 121 may transmit/receive data to/from a sensor database in which sensor data from the sensor signal collection/analysis unit 115 of the coke volume measurement unit 110 are stored.

The interface unit 121 may include a sensor communication interface 121a, a high-speed sensor data reception unit 121b and a sensor data post-processing unit 121c.

The sensor communication interface 121a may provide a communication protocol for collecting sensor data from the coke volume measurement unit 115 of the coke volume measurement unit 110. A generally used communication method, such as transmission control protocol (TCP), user datagram protocol (UDP), objecting and embedding (OLE) for process control (OPC), and the like, may be used.

The high-speed sensor data reception unit 121b may collect the sensor data through the sensor communication interface 121a at a high speed. To guarantee a rapid collection cycle, the collected sensor data are stored in a memory-base file which can be stored at a high-speed, rather than in a file or a database, such that data loss due to a system error may be prevented for a predetermined period of time. After the data are stored, the sensor data post-processing unit 121 may be requested to proceed with remaining operations which require a long time.

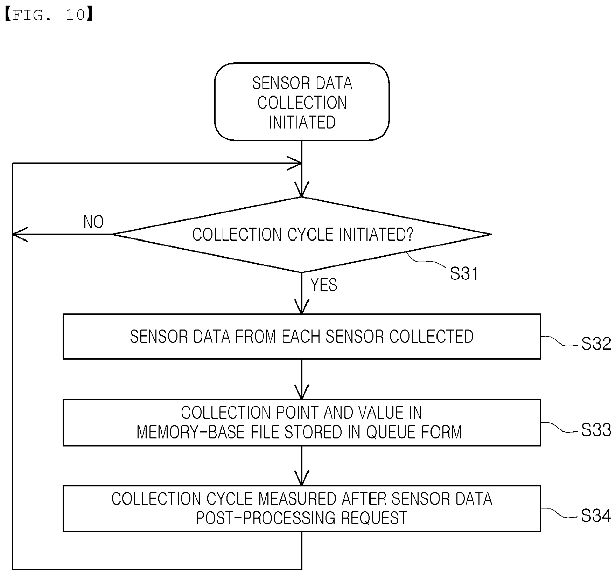

FIG. 10 is a diagram illustration an operation of a high-speed sensor data reception unit of a coke bin level analysis unit of an attached ore-measuring device according to an example embodiment.

Referring to FIG. 10 together with FIG. 1, the high-speed sensor data reception unit 121b collects data measured in the coke volume sensor unit 111, the transport position sensor unit 112, the coke bin level sensor unit 113, the coke bin vibration sensor unit 114 in accordance with a collection cycle S31 through the sensor communication interface 121a S32, and store a collection point and a measurement value in the memory-base file in the form of a query S33. The remaining operations are requested to be processed in the sensor data post-processing unit 121, and the collection cycle may be measured S34.

The sensor data post-processing unit 121c can change the sensor data temporarily stored in the memory-base file as a query to save in the sensor database. Operation requests can be made to a volume event generator 122a, a position event generator 122b, a vibration event generator 122c and a level variation event generator 122d such that an event is generated from the time-series data stored in the database to practice various analysis and predictions.

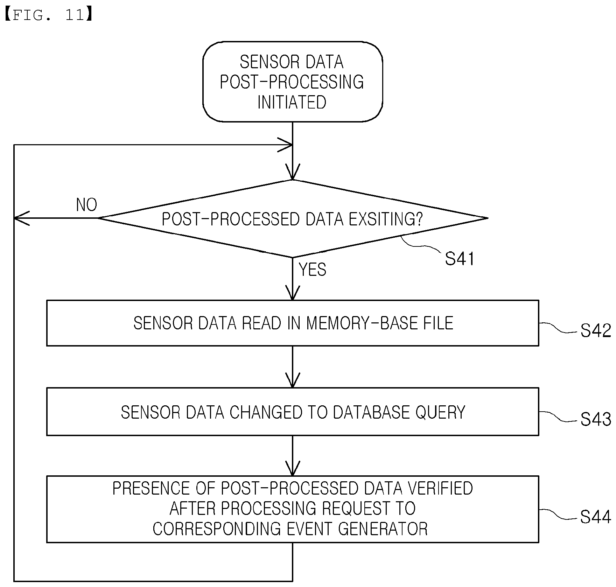

FIG. 11 is a diagram illustrating an operation of a sensor data post-processing unit of a coke bin level analysis unit of an attached ore-measuring device according to an example embodiment.

Referring to FIG. 11 together with FIG. 1, when data to be post-processed are present S41, each of sensor data is read in the memory-base file S42, and the sensor data temporarily stored in the memory-base file is changed to a query S43 to store in the sensor database as time-series data S44. Once a process request is made to a corresponding event generator, it can be verified as to whether the post-processed data are present S45.

The event generator 122 may include the volume event generator 122a, the position event generator 122b, the vibration event generator 122c and the level variation event generator 122d.

The volume event generator 122a is configured to read coke volume sensor data in the sensor database for the predetermined period of time and calculate a total volume of coke to be charged in the coke bin, thereby generating an event relevant thereto, while requesting the charging event generator 123 to proceed with remaining operations.

The position event generator 122b is configured to read transport position sensor data in the sensor database for the predetermined period of time and calculate a history of time in which the tripper car is positioned in the coke bin, thereby generating an event relevant thereto, while requesting the charging event generator 123 to proceed with remaining operations.

The vibration event generator 122c is configured to read vibration sensor data of a slide gate of the coke bin in the sensor database for the predetermined period of time and calculate a period of time during which a vibrator of each coke bin operates, thereby generating an event relevant thereto, while requesting the discharging event generator 124 to proceed with remaining operations.

The level variation event generator 122d is configured to read level sensor data in the sensor database for the predetermined period of time and calculate a history of a level variation of each coke bin, thereby generating an event relevant thereto, while requesting the charging event generator 123 and the discharging event generator 124 to proceed with remaining operations.

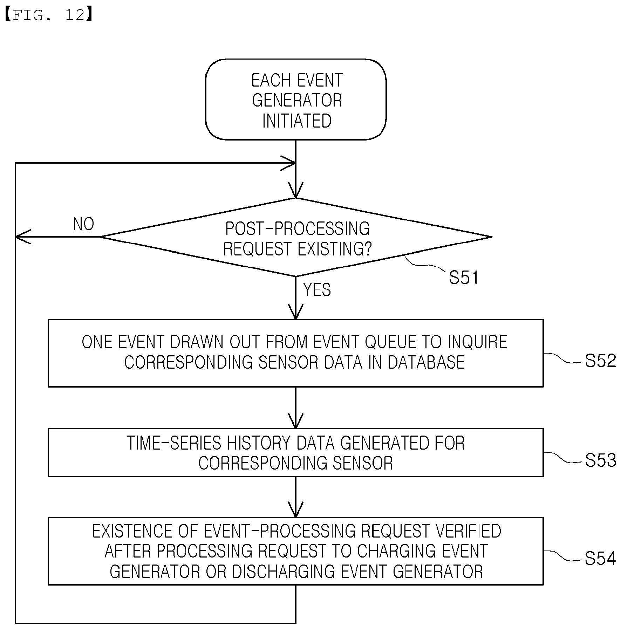

FIG. 12 is a diagram illustrating an operation of each event generator of a coke bin level analysis unit of an attached ore-measuring device according to an example embodiment.

Referring to FIG. 12 together with FIG. 1, each of the volume event generator 122a, the position event generator 122b, the vibration event generator 122c and the level variation event generator 122d draws out one event from an event queue when a request to proceed with an event is made S51, inquire corresponding sensor data in the database S52 and generate time-series history data for a corresponding sensor unit S53, followed by requesting a processing operation to the charging event generator 123 or the discharging event generator 124 and verifying as to whether there is a request to proceed with another event S54.

The charging event generator 123 is configured to calculate a level increase amount with respect to a coke CHARGE AMOUNT of each coke bin by combining the volume event, the transport position event, the discharging event and the level variation event of the coke from the event generator for the predetermined period of time. For example, the charging event generator 123 may calculate a level increase with respect to a one-time charging quantity. Generated event information may be subject to time-series data and stored in the database.

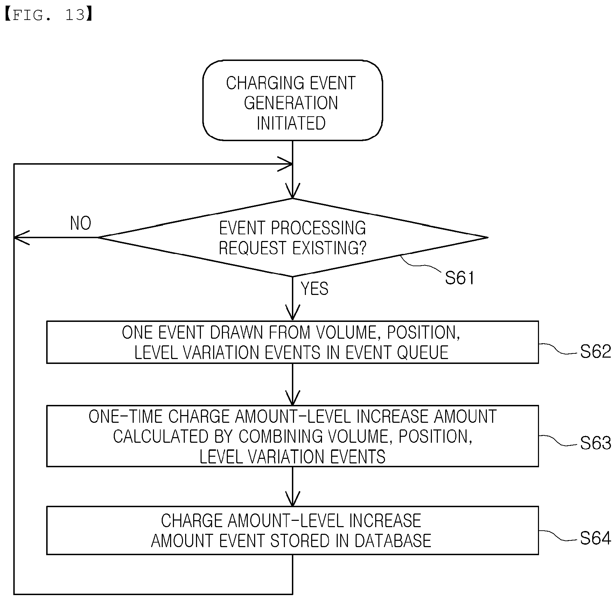

FIG. 13 is a diagram illustrating an operation of a charging event generator of a coke bin level analysis unit of an attached ore-measuring device according to an example embodiment.

Referring to FIG. 13 together with FIG. 1, the charging event generator 123 draws out one of volume events, transport position events and level variation events from an event queue S62 to combine the same upon an event-processing request is made S61, and calculates a level increase with respect to one-time charging quantity S63 followed by storing an event of the level increase with respect to the charging quantity in the database S64.

The discharging event generator 124 is configured to combine vibration events and level variation events for the predetermined period of time to generate a few times of vibration for a certain time period on a time-series for each coke bin and calculate a degree of a decrease in the level of a corresponding coke bin, thereby creating a corresponding event. For example, a level decrease can be calculated with respect to one time vibration. Thus-created event information is subject to time-series data and stored in the database.

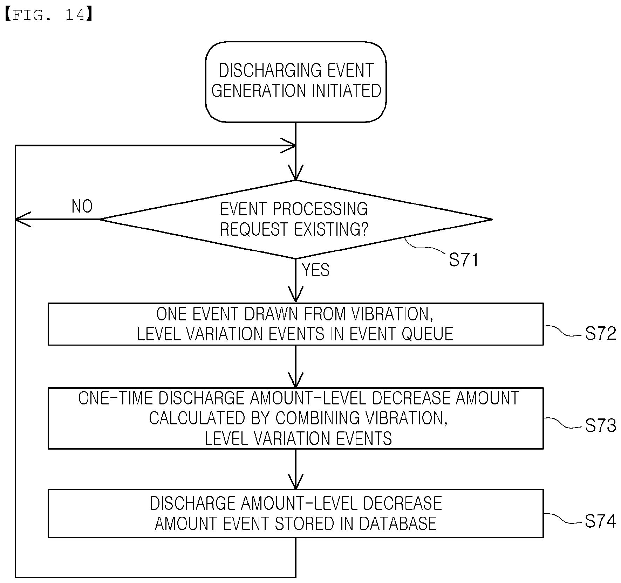

FIG. 14 is a diagram illustrating an operation of a discharging event generator of a coke bin level analysis unit of an attached ore-measuring device according to an example embodiment.

Referring to FIG. 14 together with FIG. 1, the discharging event generator 124 draws out one of vibration events and level variation events from an event queue S72 to combine the same upon an event-processing request is made S71, and calculates a level increase with respect to a number of one-time discharging quantity S73 followed by storing an event of the level decrease with respect to a number of charges in the database S74.

The calculation unit 125 is configured to calculate a predicted CHARGE AMOUNT and a predicted discharge amount for each coke bin.

The calculation unit 125 may include a level variation characteristics model derivation unit 125a, a charging pattern calculation unit 125b and a discharging pattern calculation unit 125c.

The level variation characteristics model derivation unit 125a is configured to collect and regress events corresponding to a certain predetermined period of time, among the charging and discharging events, and calculate an equation ($f\_inc(x)$) of a CHARGE AMOUNT-level increase amount model and an equation ($f\_dec(x)$) of a number of discharging-level decrease amount model. The calculated equations can be used in analysis of coke charging point prediction and attached ore state trends. The equations are calculated in a cycle, and calculation results are stored in the database to be managed as time-series data. The cycle may be determined from a setting file.

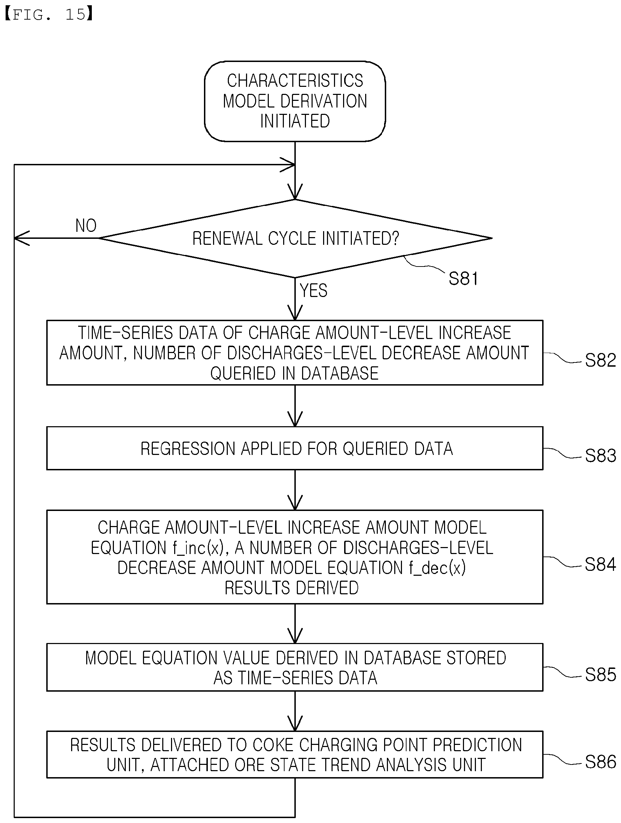

FIG. 15 is a diagram illustrating an operation of a level variation characteristics model derivation unit of a coke bin level analysis unit of an attached ore-measuring device according to an example embodiment.

Referring to FIG. 15 together with FIG. 1, the level variation characteristics model derivation unit 125a inquires time-series data of a CHARGE AMOUNT-level increase amount and a discharge amount-level decrease in a database S82 when a renewal cycle initiates S81, and applies regression for the queried data S83 to derive results of the equations ($f\_inc(x)$) of the CHARGE AMOUNT-level increase amount model and the equation ($f\_dec(x)$) of a number of discharging-level decrease amount model S84. The derived model equation values are stored in the database as time-series data S85, and the results can be delivered to a coke charging point prediction unit 126b and an attached ore state analysis unit 126a S86.

The charging pattern calculation unit 125b is configured to calculate the predicted charge amount for each coke bin based on a previously stored charging event. a predicted charge amount value can be represented as a charge amount for an average period of time, and an analysis period of a target event may be determined from a setting file. The above described charging pattern may be calculated in a cycle, and a calculation result is stored in the database to be managed as time-series data.

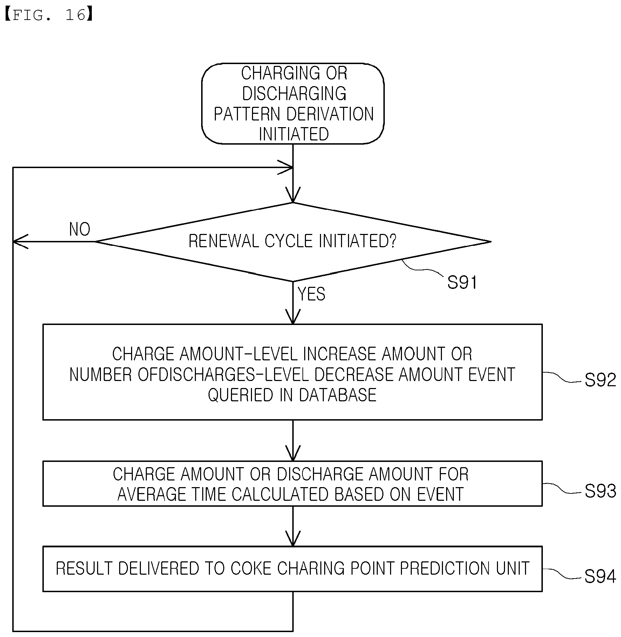

FIG. 16 is a diagram illustrating operations of a charging pattern calculation unit and a discharging pattern calculation unit of a coke bin level analysis unit of an attached ore-measuring device according to an example embodiment.

Referring to FIG. 16 together with FIG. 1, the charging pattern calculation unit 125b and the discharging pattern calculation unit 125c are configured to inquire an event of a charge amount-level increase amount or a discharging number-level amount in the database S92 when a renewal cycle initiates S91, and calculated a charge amount or a discharge amount for an average period of time based on the queried event S93 to deliver results thereof to the coke charging point prediction unit 126b S94.

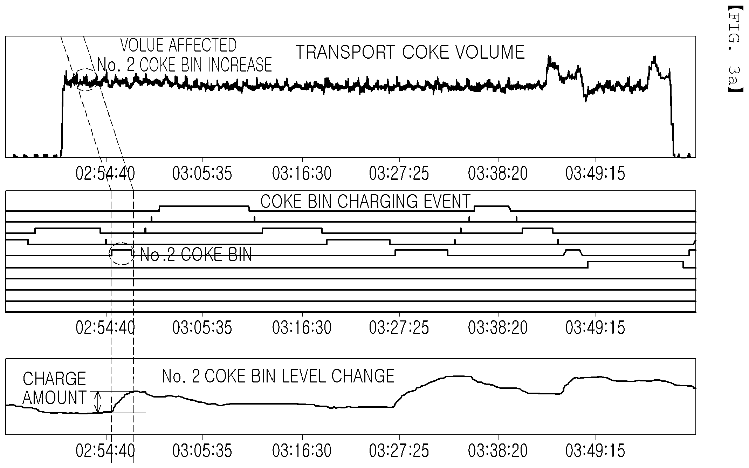

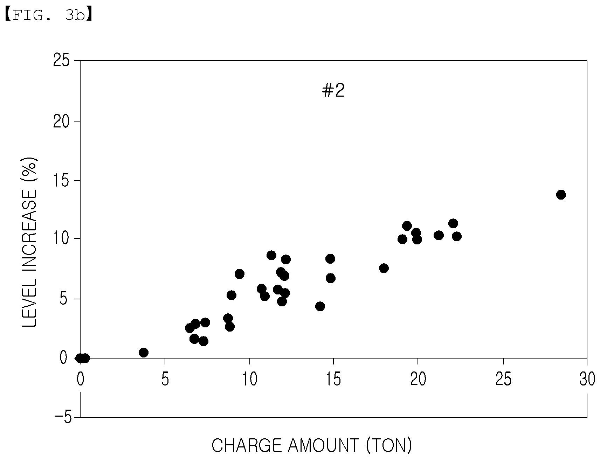

FIGS. 3A and 3B are graphs illustrating a charge amount of an attached ore-measuring device for a coke bin and level decrease data of the corresponding coke bin according to an example embodiment.

Referring to FIG. 3A, a coke volume, transported by a belt conveyer, is tracked to fine a coke bin into which a corresponding volume has been charged or uses a parallax to calculate in reverse a volume of coke transported at a charging point so that the coke bin into which the corresponding volume has been charged. Tracking of the transported coke volume involves calculating a transport volume in a unit of a certain time interval and transporting the calculated transport volume to a coke bin in which a tripper car is located at a speed of the belt conveyer followed by verifying whether an actual coke level of the coke bin has been increased due to the transported volume to determine whether the coke bin is charged or not.

Referring to FIG. 3B, a graph in which a data point of the level increase of the corresponding coke bin with respect to the coke charge amount is calculated is observed.

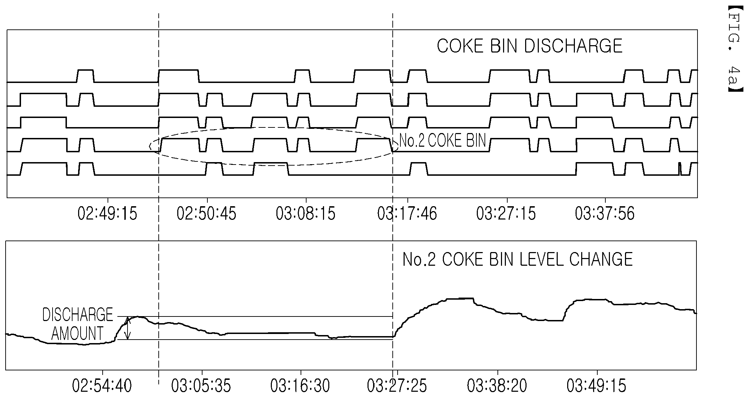

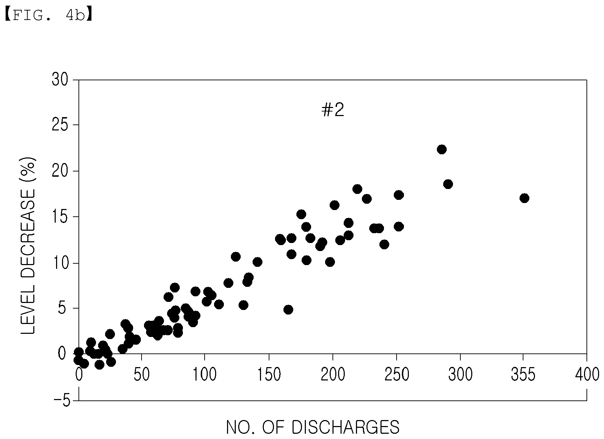

FIGS. 4A and 4B are graphs illustrating occurrence of discharging of an attached ore-measuring device for a coke bin and data of a level decrease of a corresponding coke bin according to an example embodiment.

Referring to FIG. 4A, a decrease amount of a coke level of a corresponding coke bin is tracked at the time of discharging to calculate level decrease amount data with respect to a number of discharges as illustrated in FIG. 4B.

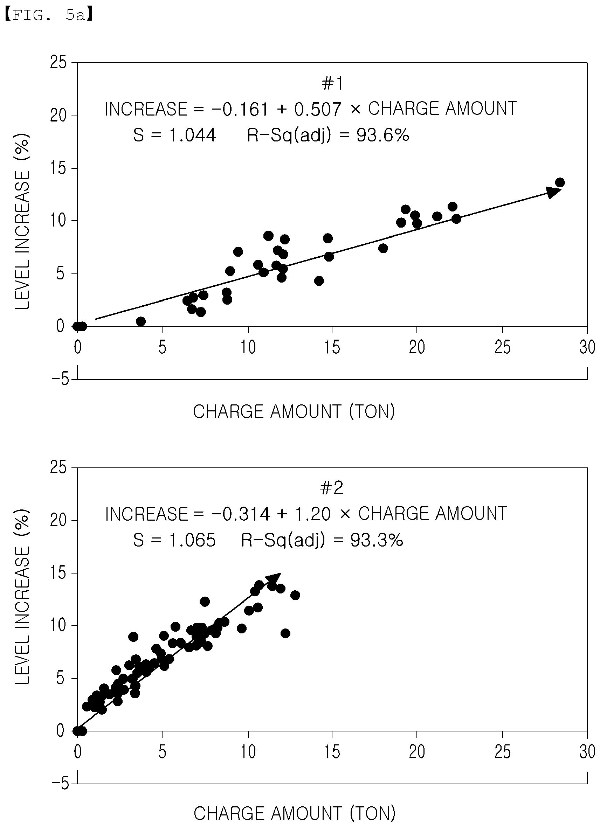

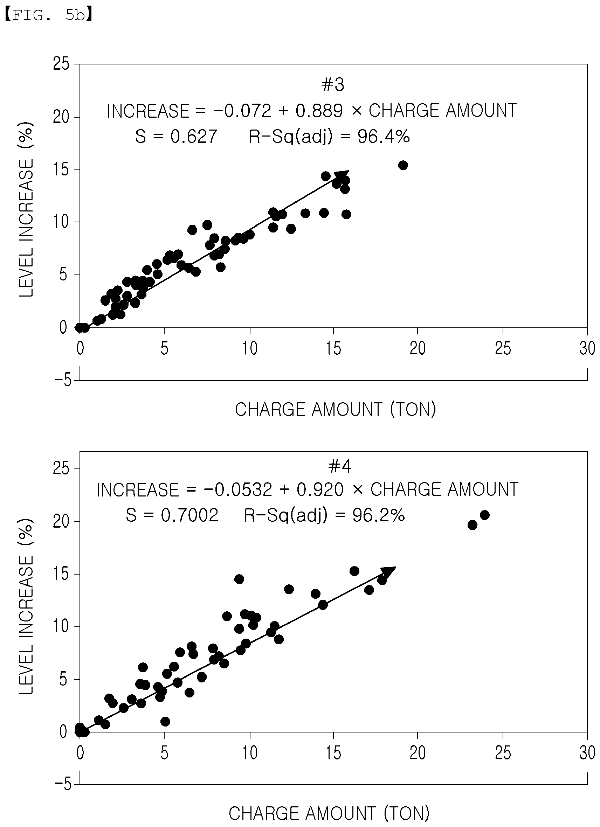

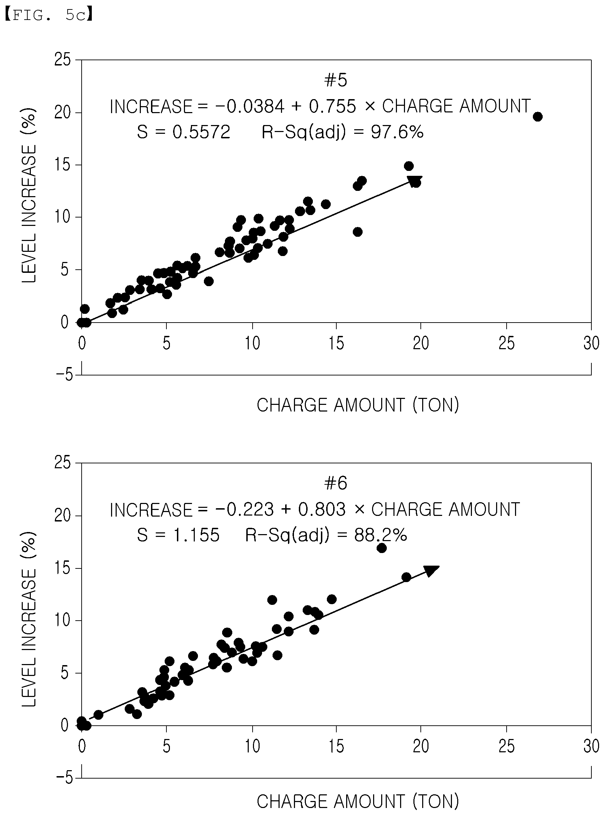

FIGS. 5A to 5C are graphs illustrating data of a level increase for each coke bin.

Referring to FIGS. 5A to 5C, in the case in which first to coke bins #1 to #6 are present, for example, the coke bins are shown to exhibit different level increase amounts even in the case of the same charge amount. In this regard, regression, one of big data analysis methods, needs to be used to derive an equation model for each coke bin. Such characteristics, however, depend on a state of attached ore, thereby requiring recalculation in a cycle.

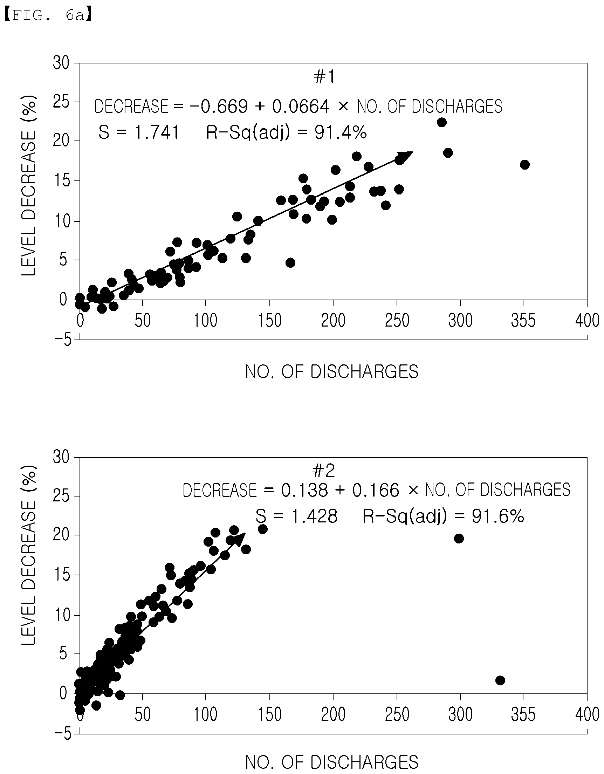

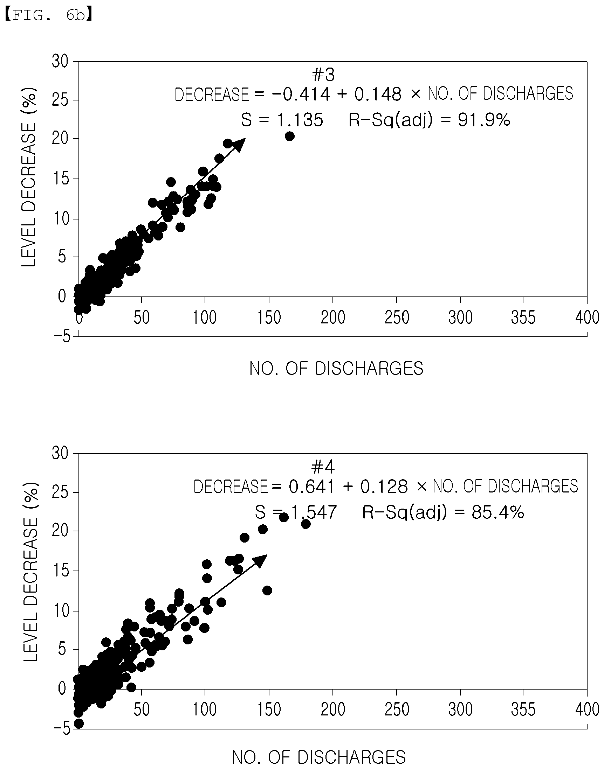

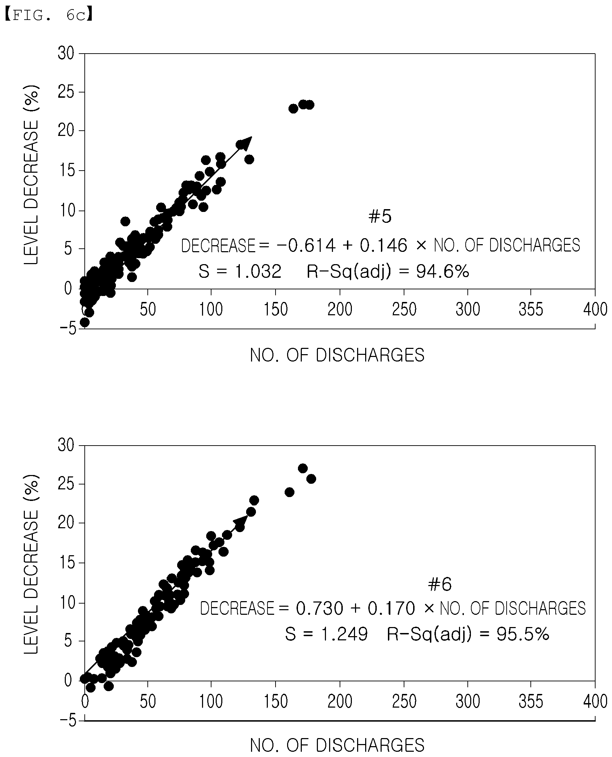

FIGS. 6A to 6C are graphs illustrating data of a level decrease for each coke bin.

Referring to FIGS. 6A to 6C, in the case in which first to coke bins #1 to #6 are present, for example, the coke bins are shown to exhibit different level decrease amounts even in the case of the same discharge amount. In this regard, regression, one of big data analysis methods, needs to be used to derive an equation model for each coke bin. Such characteristics, however, depends on a state of attached ore, thereby requiring recalculation in a cycle.

The analysis unit 126 is configured to analyze a change in an attached ore state inside a corresponding coke bin in accordance with a level variation for each coke bin and may further calculate a time point at which the coke inside the corresponding coke bin is charged in a blast furnace in accordance with the predicted charging and discharge amounts of the calculation unit and the level variation for each coke bin.

The analysis unit 126 may include an attached ore state trend analysis unit 126a and a coke charging point prediction unit 126b.

The coke charging point prediction unit 126b is configured to calculate a time point at which the coke inside the corresponding coke bin is charged in the blast furnace according to the predicted charging and discharge amounts and the equations of a charge amount-level increase amount model and a number of discharging-level decrease amount model. More specifically, the predicted charging and discharge amounts and the equations of a charge amount-level increase amount model and a number of discharging-level decrease amount model are used to calculate a time point at which a coke of a coke bin wall is charged in a blast furnace. A prediction period of time may be determined from the setting file.

Values calculated in each component may be displayed on a screen in real-time. For example, a level increase characteristics model, a level decrease characteristics model, a coke charging point, an attached ore state, and the like may be represented in a human-machine interface (HMI) method in the second.

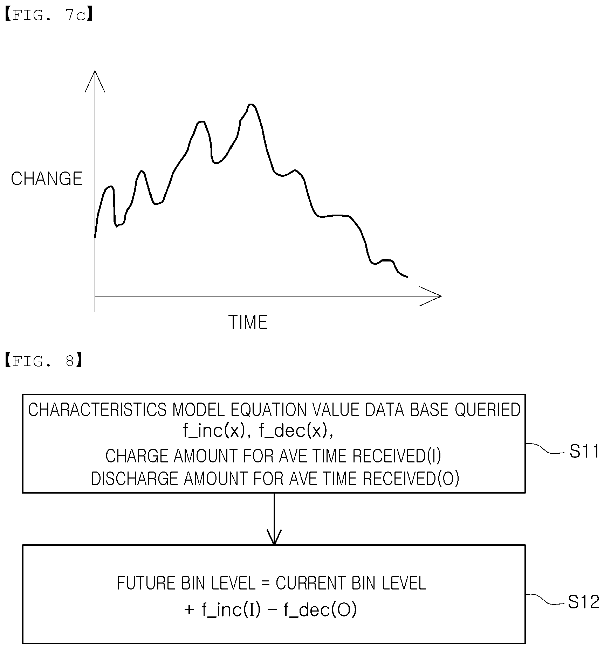

FIG. 8 is a flow chart illustrating an operation of a coke bin level measurement unit of an attached ore-measuring device of a coke bin according to an example embodiment.

Referring to FIG. 8 together with FIG. 1, characteristics model equation values (f_inc(x), f_dec(x)) are queried in the database, and a charge amount (I) and a discharge amount (0) for an average period of time can be received S11.

A coke bin level can be predicted as shown in Equation 1 below S12:

$$(\text{Equation 1})$$

$$\texttt{Future coke bin level = current coke bin level +}$$

$$\texttt{(f\_inc(I)-f\_dec(O))}$$

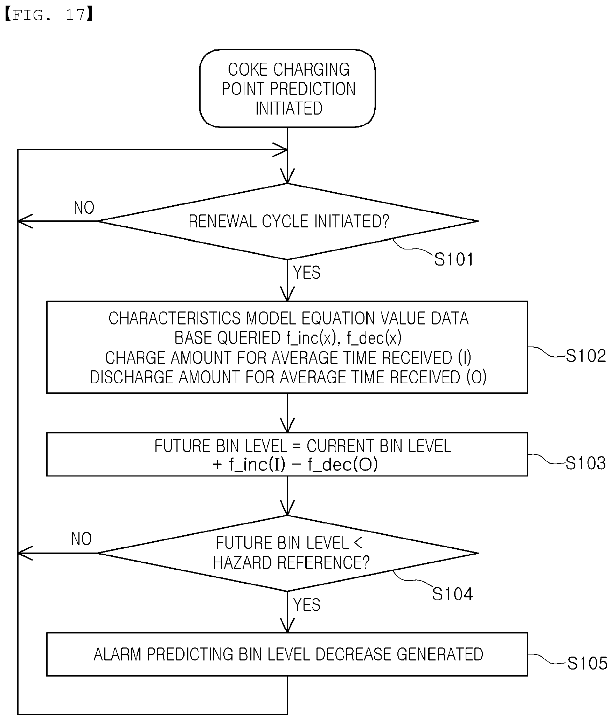

FIG. 17 is a flow chart illustrating an operation of a coke bin level measurement unit of an attached ore-measuring device of a coke bin according to an example embodiment in more detail.

Referring to FIG. 17 together with FIG. 1, the coke charging point prediction unit 126b inquires characteristics model equation values (f_inc(x), f_dec(x)) corresponding to each coke bin in the database when a renewal cycle initiates S101, and receives a charge amount (I) and a discharge amount (O) for an average period of time S102.

A future coke level of a coke bin is calculated in accordance with Equation 1. When the calculated future coke level of the coke bin is below a hazard reference level, prediction of a coke charging point is repeated. In the meantime, when the calculated future coke level of the coke bin is above a hazard reference level S103, an alarm indicating a predicted decrease of the coke level of the coke bin may be generated S104.

The attached ore state trend analysis unit 126a is configured to analysis detachment, an increase and deceleration of the attached ore inside the coke bin according to the equations of a charge amount-level increase amount model and a number of discharging-level decrease amount model from the level variation characteristics model derivation unit. More specifically, the level variation characteristics model equation values for each coke bin stored in the database as time-series are analyzed to analyze a degree of variations of the equation values. When a slope due to the equation or an equivalent value thereto varies, it can be analyzed as to whether an attached ore has been detached, increased or decelerated. Further, a level, at which the coke can be charged in the blast furnace due to generation of the attached ore, can be recalculated. A analysis period of time, for which a trend of the attached ore is analyzed, may be determined from the setting file.

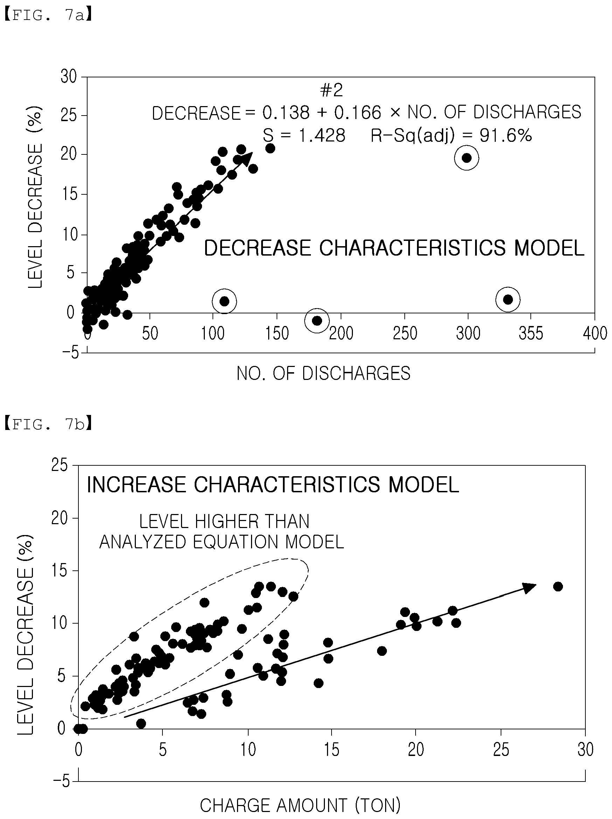

FIGS. 7A to 7C are diagrams illustrating a state of attached ore of an attached ore-measuring device for a coke bin according to an example embodiment.

Referring to FIG. 7A, a level decrease variation due to the attached ore can be confirmed, which indicates that despite multiple attempts of discharges, a level of a corresponding coke bin is relatively low or significantly little compared to a number of discharges or gate opening due to the attached ore is narrowed or blocked (see the circle in the drawings). This enables an outliner target to be extracted by big data clustering, cook's distance calculation, and the like.

Referring to FIG. 7B, due to the generation of the attached ore, a coke level may increase relatively high when an equivalent amount of coke are charged in the coke bin, thereby enabling prediction of an amount of the attached ore.

Referring to FIG. 7C, information of each variation is used to analyze a state of the attached ore over time such that an issue point can be identified and a significant level of a level, at which the coke can be charged, due to the attached ore can be changed.

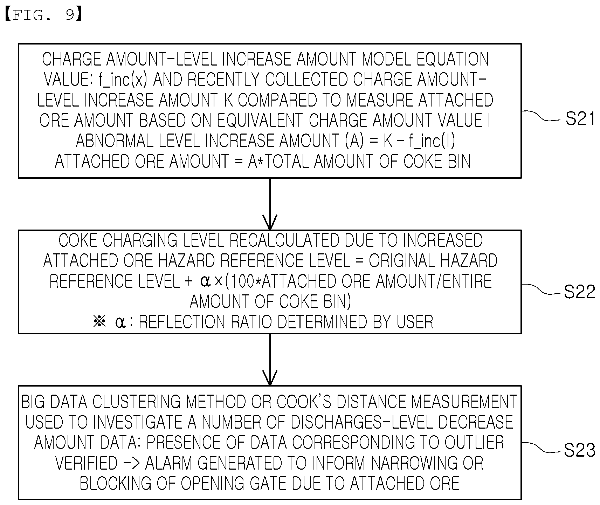

FIG. 9 is a flow chart illustrating an operation of a coke bin level measurement unit of an attached ore-measuring device of a coke bin according to an example embodiment.

Referring to FIG. 9 together with FIG. 1, the attached ore state trend analysis unit 126a is configured to compare the equation value of the charge amount-level increase amount model ($f\_inc(x)$) and K, a recently collected charge amount-level increase amount, to measure an amount of the attached ore based on I, an equivalent charge amount value S21.

That is, an amount of the attached ore can be measured as shown in Equation 2 below:

(Equation 2)

Abnormal level increase amount (A) = K-f_inc(I)

Amount of attached ore = A*total quantity of coke bin.

As shown in Equation 3 below, a level of coke charging due to an increased amount of the attached ore can be recalculated S22:

(Equation 3)

Hazard reference level = Original hazard reference level + a*(100*attached ore amount/total quantity of coke bin).

where a may be a reflection ratio determined by a user.

Data of a level decrease amount with respect to a number of discharges are investigated using big data clustering, cook's distance calculation, and the like, in order to confirm the presence of data corresponding to an outliner. In this regard, an alarm indicating that gate opening of the coke bin is narrowed or blocked due to the attached ore may be generated S23.

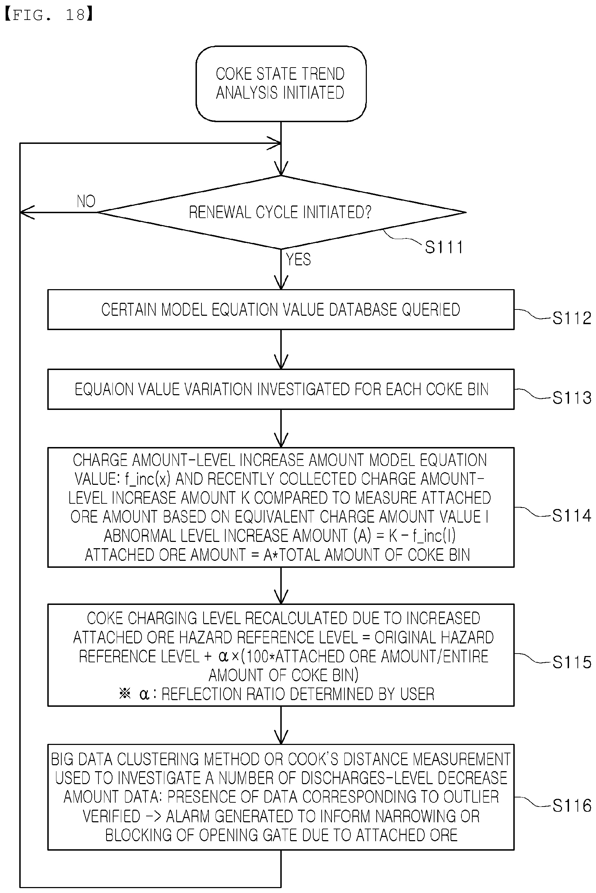

FIG. 18 is a flow chart illustrating an operation of an attached ore state trend analysis unit of an attached ore-measuring device of a coke bin according to an example embodiment in more detail.

Referring to FIG. 18 together with FIG. 1, the attached ore state trend analysis unit 126a inquires characteristics model equation values ($f\_inc(x)$, $f\_dec(x)$) corresponding to each coke bin in the database S112 when a renewal cycle initiates S111, and investigates variations of equation values for each coke bin S113. As shown in Equation 2 above, the equation value of the charge amount-level increase amount model ($f\_inc(x)$) and K, the recently collected charge amount-level increase amount, are compared to measure an amount of the attached ore based on the equivalent charge amount value I S113. As shown in Equation 3, a level at which the coke is charged due to the increased attached ore can be recalculated S114. Data of a level decrease amount with respect to a number of discharges are investigated using big data clustering, cook's distance calculation, and the like, in order to confirm the presence of data corresponding to an outliner. In this regard, an alarm indicating that gate opening of the coke bin is narrowed or blocked due to the attached ore may be generated S115.

As previously described, according to the present invention, information of an attached ore state of a coke bin is provided to contribute to accurate calculation of a reserve quantity of a coke bin and prediction of a coke charging point in advance. In this regard, an operation of supplying coke to prevent the same can be proceeded, and narrowing or blocking of gate opening of the coke bin can be predicted in advance, resulting in an effect of securing operational stability of a blast furnace.

While the invention has been shown and described with respect to the embodiments, it will be understood by those skilled in the art that various changes and modifications may be made without departing from the scope of the invention as defined in the following claims.

**Claims**

1. An attached ore-measuring device (100) for a coke bin, comprising:

   a coke volume measurement unit (110) configured to measure a volume of coke charged in a plurality of coke bins and a volume of coke discharged from a plurality of the coke bins; and
   a coke bin level analysis unit (120) configured to derive a coke level variation characteristics model for each coke bin in accordance with a measurement result of the coke charged in a plurality of the coke bins and the coke discharged from a plurality of the coke bins, thereby calculating an attached ore state of each coke bin, wherein the coke bin level analysis unit (120) comprises an event generator (122) configured to generate a volume event, a transport position event, a discharging event and a level variation event of the coke in the sensor database based on the sensor data for a predetermined period of time;
   a charging event generator (123) configured to calculate a level increase amount with respect to a coke charge amount of each coke bin by combining the volume event, the transport position event, the discharging event and the level variation event of the coke from the event generator for the predetermined period of time;
   a discharging event generator (124) configured to calculate a level decrease amount with respect to a coke discharge amount of each coke bin by combining a vibration event and the level variation event from the event generator (122) for the predetermined period of time;
   a calculation unit (125) configured to calculate a predicted charge amount and a predicted discharge amount for each coke bin; and
   an analysis unit (126) configured to analyze a change in an attached ore state inside a corresponding coke bin in accordance with a level variation for each coke bin,
   wherein the calculation unit (125) comprises a level variation characteristics model derivation unit (125a) configured to collect and regress events corresponding to a certain predetermined period of time, among the charging and discharging events, and calculate an equation of a charge amount-level increase amount model and an equation of a number of discharging-level decrease amount model,
   wherein the coke level variation characteristics model has an equation of the charge amount-level increase amount model indicating the relationship between the volume of coke charged in the coke bin and the coke level increase amount in the coke bin, and an equation of the number of discharging-level decrease amount model indicating the relationship between the number of discharging of the coke and the coke level decrease amount in the coke bin;
   wherein the coke volume measurement unit (110) comprises:

      a coke volume sensor unit (111) configured to measure an amount of coke passing a belt conveyer connected to the coke bin;
      a transport position sensor unit (112) configured to detect a coke bin in which a tripper car is positioned;
      a coke bin level sensor unit (113) configured to measure a reserve quantity stored in the coke bin;
      a coke bin vibration sensor unit (114) configured to detect whether a coke of the coke bin is discharged; and
      a sensor signal collection/analysis unit (115) configured to collect and analyze detection signals from the coke volume sensor unit (111), the transport position sensor unit (112), the coke bin level sensor unit (113) and the coke bin vibration sensor unit (114).

2. The device of claim 1, wherein the coke bin level analysis unit (120) further comprises:
   an interface unit (121) configured to transmit/receive data to/from a sensor database in which sensor data from the coke volume measurement unit (110) are stored.

3. The device of claim 1, wherein the analysis unit (126) is configured to calculate a time point at which the coke inside the corresponding coke bin is charged in a blast furnace in accordance with the predicted charging and discharge amounts of the calculation unit and the level variation for each coke bin.

4. The device of claim 2, wherein the interface unit (121) comprises:

a sensor communication interface (121a) configured to provide a communication protocol for collecting sensor data from the coke volume measurement unit (110);

a high-speed sensor data reception unit (121b) configured to collect the sensor data through the sensor communication interface (121a) at a high speed; and

a sensor data post-processing unit (121c) configured to change the sensor data temporarily stored in a memory-base file to a query to store the same in the sensor database.

5. The device of claim 1, wherein the event generator (122) comprises:

a volume event generator configured (122a) to read coke volume sensor data in the sensor database for the predetermined period of time and calculate a total volume of coke to be charged in the coke bin, thereby generating an event relevant thereto;

a position event generator (12b) configured to read transport position sensor data in the sensor database for the predetermined period of time and calculate a history of time in which the tripper car is positioned in the coke bin, thereby generating an event relevant thereto;

a vibration event generator (122c) configured to read vibration sensor data of a slide gate of the coke bin in the sensor database for the predetermined period of time and calculate a period of time during which a vibrator of each coke bin operates, thereby generating an event relevant thereto; and

a level variation event generator (122d) configured to read level sensor data in the sensor database for the predetermined period of time and calculate a history of a level variation of each coke bin, thereby generating an event relevant thereto.

6. The device of claim 1, wherein the calculation unit (125) further comprises:

a charging pattern calculation unit (125b) configured to calculate the predicted charge amount for each coke bin based on a previously stored charging event; and

a discharging pattern calculation unit (125c) configured to calculate the predicted discharge amount for each coke bin based on a previously stored discharging event.

7. The device of claim 1, wherein the analysis unit (126a) comprises an attached ore state trend analysis unit (126a) configured to analysis detachment, an increase and deceleration of the attached ore inside the coke bin according to the equations of a charge amount-level increase amount model and a number of discharging-level decrease amount model from the level variation characteristics model derivation unit.

8. The device of claim 7, wherein the analysis unit further comprises a coke charging point prediction unit (126b) configured to calculate a time point at which the coke inside the corresponding coke bin is charged in the blast furnace according to the predicted charging and discharge amounts and the equations of a charge amount-level increase amount model and a number of discharging-level decrease amount model.

**Patentansprüche**

1. Vorrichtung zum Messen von anhaftendem Erz (100) für einen Koksbunker, umfassend:

eine Koksvolumen-Messeinheit (110), die dafür ausgelegt ist, ein in eine Vielzahl von Koksbunkern eingefülltes Koksvolumen und ein von einer Vielzahl der Koksbunker ausgetragenes Koksvolumen zu messen; und

eine Einheit zur Analyse des Koksbunker-Füllstands (120), die dafür ausgelegt ist, in Übereinstimmung mit einem Ergebnis der Messung des in eine Vielzahl der Koksbunker eingefüllten Kokses und des von einer Vielzahl der Koksbunker ausgetragenen Kokses ein Modell der Charakteristik der Koksfüllstandsveränderung für jeden Koksbunker abzuleiten, wodurch ein Erzanhaftungszustand jedes Koksbunkers berechnet wird,

wobei die Einheit zur Analyse des Koksbunker-Füllstands (120) einen Ereignisgenerator (122) umfasst, der dafür ausgelegt ist, ein Volumenereignis, ein Transportpositionsereignis, ein Austragsereignis und ein Füllstandsveränderungsereignis für den Koks in der Sensordatenbank auf der Grundlage der Sensordaten für einen vorbestimmten Zeitraum zu generieren;

einen Beschickungsereignisgenerator (123), der dafür ausgelegt ist, eine Füllstandserhöhungsmenge in Bezug auf eine Koksbeschickungsmenge jedes Koksbunkers zu berechnen, indem das Volumenereignis, das Transportpositionsereignis, das Austragsereignis und das Füllstandsveränderungsereignis des Kokses aus dem Ereignisgenerator für den vorbestimmten Zeitraum kombiniert werden;

einen Austragsereignisgenerator (124), der dafür ausgelegt ist, eine Füllstandsverringerungsmenge in Bezug auf eine Koksaustragsmenge jedes Koksbunkers zu berechnen, indem ein Schwingungsereignis und das Füllstandsveränderungsereignis aus dem Ereignisgenerator (122) für den vorbestimmten Zeitraum kombiniert werden;

eine Berechnungseinheit (125), die dafür ausgelegt ist, eine vorausgesagte Beschickungsmenge und eine vorausgesagte Austragsmenge für jeden Koksbunker zu berechnen; und

eine Analyseeinheit (126), die dafür ausgelegt ist, eine Änderung eines Erzanhaftungszustands in einem entsprechenden Koksbunker in Übereinstimmung mit einer Füllstandsveränderung für jeden Koksbunker zu analysieren,

wobei die Berechnungseinheit (125) eine Einheit zur Ableitung eines Modells der Charakteristik der Füllstandsveränderung (125a) umfasst, die dafür ausgelegt ist, einem bestimmten vorbestimmten Zeitraum entsprechende Ereignisse unter den Beschickungs- und Austragsereignissen zu sammeln und zu regressieren und eine Gleichung eines Beschickungsmengen-Füllstandserhöhungsmengen-Modells und eine Gleichung eines Austragsanzahl-Füllstandsverringerungsmengen-Modells zu berechnen,

wobei das Modell der Charakteristik der Koksfüllstandsveränderung Folgendes beinhaltet: eine Gleichung des Beschickungsmengen-Füllstandserhöhungsmengen-Modells, die die Beziehung zwischen dem Volumen des in den Koksbunker eingefüllten Kokses und der Koksfüllstandserhöhungsmenge in dem Koksbunker angibt, und eine Gleichung des Austragsanzahl-Füllstandsverringerungsmengen-Modells, die die Beziehung zwischen der Anzahl der Koksaustragungen und der Koksfüllstandsverringerungsmenge in dem Koksbunker angibt;

wobei die Koksvolumen-Messeinheit (110) Folgendes umfasst:

eine Koksvolumen-Sensoreinheit (111), die dafür ausgelegt ist, eine Koksmenge zu messen, die ein mit dem Koksbunker verbundenes Förderband passiert;

eine Transportpositions-Sensoreinheit (112), die dafür ausgelegt ist, einen Koksbunker zu detektieren, in dem ein Bandschleifenwagen positioniert ist;

eine Koksbunkerfüllstands-Sensoreinheit (113), die dafür ausgelegt ist, eine in dem Koksbunker gespeicherte Reservemenge zu messen;

eine Koksbunkerschwingungs-Sensoreinheit (114), die dafür ausgelegt ist, zu detektieren, ob Koks aus dem Koksbunker ausgetragen wird; und

eine Sensorsignal-Sammel-/Analyseeinheit (115), die dafür ausgelegt ist, Detektionssignale aus der Koksvolumen-Sensoreinheit (111), der Transportpositions-Sensoreinheit (112), der Koksbunkerfüllstands-Sensoreinheit (113) und der Koksbunkerschwingungs-Sensoreinheit (114) zu sammeln und zu analysieren.

2. Vorrichtung nach Anspruch 1, wobei die Einheit zur Analyse des Koksbunker-Füllstands (120) ferner Folgendes umfasst:

eine Schnittstelleneinheit (121), die dafür ausgelegt ist, Daten zu/von einer Sensordatenbank zu senden/empfangen, in der Sensordaten aus der Koksvolumen-Messeinheit (110) gespeichert sind.

3. Vorrichtung nach Anspruch 1, wobei die Analyseeinheit (126) dafür ausgelegt ist, in Übereinstimmung mit den vorausgesagten Beschickungs- und Austragsmengen der Berechnungseinheit und der Füllstandsveränderung für jeden Koksbunker einen Zeitpunkt zu berechnen, zu dem der Koks in dem entsprechenden Koksbunker in einen Hochofen eingefüllt wird.

4. Vorrichtung nach Anspruch 2, wobei die Schnittstelleneinheit (121) Folgendes umfasst:

eine Sensorkommunikationsschnittstelle (121a), die dafür ausgelegt ist, ein Kommunikationsprotokoll zum Sammeln von Sensordaten aus der Koksvolumen-Messeinheit (110) bereitzustellen;

eine Hochgeschwindigkeits-Sensordaten-Empfangseinheit (121b), die dafür ausgelegt ist, die Sensordaten über die Sensorkommunikationsschnittstelle (121a) mit hoher Geschwindigkeit zu sammeln; und

eine Sensordaten-Nachbearbeitungseinheit (121c), die dafür ausgelegt ist, die vorübergehend in einer speicherbasierten Datei gespeicherten Sensordaten in eine Abfrage zu ändern, um dieselben in der Sensordatenbank zu speichern.

5. Vorrichtung nach Anspruch 1, wobei der Ereignisgenerator (122) Folgendes umfasst:

einen Volumenereignisgenerator (122a), der dafür ausgelegt ist, Koksvolumen-Sensordaten in der Sensordatenbank für den vorbestimmten Zeitraum zu lesen und ein Gesamtvolumen an Koks zu berechnen, das in den Koksbunker einzufüllen ist, wodurch ein entsprechendes Ereignis generiert wird;

einen Positionsereignisgenerator (12b), der dafür ausgelegt ist, Transportpositions-Sensordaten in der Sensordatenbank für den vorbestimmten Zeitraum zu lesen und eine Historie der Zeit zu berechnen, in der der Bandschleifenwagen in dem Koksbunker positioniert ist, wodurch ein entsprechendes Ereignis generiert wird;

einen Schwingungsereignisgenerator (122c), der dafür ausgelegt ist, Schwingungssensordaten eines Schiebers des Koksbunkers in der Sensordatenbank für den vorbestimmten Zeitraum zu lesen und einen Zeitraum zu berechnen, während dem ein Rüttler jedes Koksbunkers arbeitet, wodurch ein entsprechendes Ereignis generiert wird; und

einen Füllstandsveränderungsereignis-Generator (122d), der dafür ausgelegt ist, Füllstands-Sensordaten in der Sensordatenbank für den vorbestimmten Zeitraum zu lesen und eine Historie einer Füllstandsveränderung jedes Koksbunkers zu berechnen, wodurch ein entsprechendes Ereignis generiert wird.

6. Vorrichtung nach Anspruch 1, wobei die Berechnungseinheit (125) ferner Folgendes umfasst:

eine Beschickungsmuster-Berechnungseinheit (125b), die dafür ausgelegt ist, die vorausgesagte Beschickungsmenge für jeden Koksbunker auf der Grundlage eines vorher gespeicherten Beschickungsereignisses zu berechnen; und

eine Austragsmuster-Berechnungseinheit (125c), die dafür ausgelegt ist, die vorausgesagte Austragsmenge für jeden Koksbunker auf der Grundlage eines vorher gespeicherten Austragsereignisses zu berechnen.

7. Vorrichtung nach Anspruch 1, wobei die Analyseeinheit (126a) eine Einheit zur Analyse des Erzanhaftungszustandstrends (126a) umfasst, die dafür ausgelegt ist, die Ablösung, eine Zunahme und die Verlangsamung des anhaftenden Erzes in dem Koksbunker gemäß den Gleichungen eines Beschickungsmengen-Füllstandserhöhungsmengen-Modells und eines Austragsanzahl-Füllstandsverringerungsmengen-Modells aus der Einheit zur Ableitung eines Modells der Charakteristik der Füllstandsveränderung zu analysieren.

8. Vorrichtung nach Anspruch 7, wobei die Analyseeinheit ferner eine Koksbeschickungspunkt-Voraussageeinheit (126b) umfasst, die dafür ausgelegt ist, gemäß den vorausgesagten Beschickungs- und Austragsmengen und den Gleichungen eines Beschickungsmengen-Füllstandserhöhungsmengen-Modells und eines Austragsanzahl-Füllstandsverringerungsmengen-Modells einen Zeitpunkt zu berechnen, zu dem der Koks in dem entsprechenden Koksbunker in den Hochofen eingefüllt wird.

**Revendications**

1. Dispositif de mesure de minerai attaché (100) pour un bac à coke, comprenant :

une unité de mesure de volume de coke (110) configurée pour mesurer un volume de coke chargé dans une pluralité de bacs à coke et un volume de coke déchargé d'une pluralité des bacs à coke ; et

une unité d'analyse de niveau de bac à coke (120) configurée pour dériver un modèle de caractéristiques de variation de niveau de coke pour chaque bac à coke conformément à un résultat de mesure du coke chargé dans une pluralité des bacs à coke et du coke déchargé d'une pluralité des bacs à coke, calculant ainsi un état de minerai attaché de chaque bac à coke,

dans lequel l'unité d'analyse de niveau de bac à coke (120) comprend un générateur d'événements (122) configuré pour générer un événement de volume, un événement de position de transport, un événement de déchargement et un événement de variation de niveau du coke dans la base de données de capteur sur la base des données de capteur pendant une période de temps prédéterminée ;

un générateur d'événements de chargement (123) configuré pour calculer une quantité d'augmentation de niveau par rapport à une quantité de chargement de coke de chaque bac à coke en combinant l'événement de volume, l'événement de position de transport, l'événement de déchargement et l'événement de variation de niveau du coke issus du générateur d'événements pendant la période de temps prédéterminée ;

un générateur d'événements de déchargement (124) configuré pour calculer une quantité de diminution de niveau par rapport à une quantité de déchargement de coke de chaque bac à coke en combinant un événement de vibration et l'événement de variation de niveau issus du générateur d'événements (122) pendant la période de temps prédéterminée ;

une unité de calcul (125) configurée pour calculer une quantité de chargement prédite et une quantité de déchargement prédite pour chaque bac à coke ; et

une unité d'analyse (126) configurée pour analyser un changement d'état de minerai attaché à l'intérieur d'un bac à coke correspondant conformément à une variation de niveau pour chaque bac à coke,

dans lequel l'unité de calcul (125) comprend une unité de dérivation de modèle de caractéristiques de variation de niveau (125a) configurée pour collecter et régresser des événements correspondant à une certaine période de temps prédéterminée, parmi les événements de chargement et de déchargement, et calculer une équation d'un modèle de quantité d'augmentation de niveau de quantité de chargement et une équation d'un nombre de modèle de quantité de diminution de niveau de déchargement,

dans lequel le modèle de caractéristiques de variation de niveau de coke a une équation du modèle de quantité d'augmentation de niveau de quantité de chargement indiquant la relation entre le volume de coke chargé dans le bac à coke et la quantité d'augmentation de niveau de coke dans le bac à coke, et une équation du nombre de modèle de quantité de diminution de niveau de déchargement indiquant la relation entre le nombre de déchargement du coke et la quantité de diminution de niveau de coke dans le bac à coke ;

dans lequel l'unité de mesure de volume de coke (110) comprend :

une unité de capteur de volume de coke (111) configurée pour mesurer une quantité de coke passant sur un transporteur à courroie relié au bac à coke ;

une unité de capteur de position de transport (112) configurée pour détecter un bac à coke dans lequel un chariot déverseur est positionné ;

une unité de capteur de niveau de bac à coke (113) configurée pour mesurer une quantité de réserve stockée dans le bac à coke ;

une unité de capteur de vibrations de bac à coke (114) configurée pour détecter si un coke du bac à coke est déchargé ; et

une unité de collecte/analyse de signaux de capteur (115) configurée pour collecter et analyser des signaux de détection de l'unité de capteur de volume de coke (111), de l'unité de capteur de position de transport (112), de l'unité de capteur de niveau de bac à coke (113) et de l'unité de capteur de vibrations de bac à coke (114).

2. Dispositif selon la revendication 1, dans lequel l'unité d'analyse de niveau de bac à coke (120) comprend en outre : une unité d'interface (121) configurée pour transmettre/recevoir des données à/depuis une base de données de capteur dans laquelle des données de capteur de l'unité de mesure de volume de coke (110) sont stockées.

3. Dispositif selon la revendication 1, dans lequel l'unité d'analyse (126) est configurée pour calculer un point temporel auquel le coke à l'intérieur du bac à coke correspondant est chargé dans un haut fourneau conformément aux quantités de chargement et de déchargement prédites de l'unité de calcul et à la variation de niveau pour chaque bac à coke.

4. Dispositif selon la revendication 2, dans lequel l'unité d'interface (121) comprend :

une interface de communication de capteur (121a) configurée pour fournir un protocole de communication pour collecter des données de capteur de l'unité de mesure de volume de coke (110) ;

une unité de réception de données de capteur à haut débit (121b) configurée pour collecter les données de capteur par le biais de l'interface de communication de capteur (121a) à un haut débit ; et

une unité de post-traitement de données de capteur (121c) configurée pour changer les données de capteur stockées temporairement dans un fichier de base de mémoire en une requête pour stocker celles-ci dans la base de données de capteur.

5. Dispositif selon la revendication 1, dans lequel le générateur d'événements (122) comprend :

un générateur d'événements de volume configuré (122a) pour lire des données de capteur de volume de coke dans la base de données de capteur pendant la période de temps prédéterminée et calculer un volume total de coke à charger dans le bac à coke, générant ainsi un événement qui s'y rapporte ;

un générateur d'événements de position (12b) configuré pour lire des données de capteur de position de transport dans la base de données de capteur pendant la période de temps prédéterminée et calculer un historique de temps où le chariot déverseur est positionné dans le bac à coke, générant ainsi un événement qui s'y rapporte ;

un générateur d'événements de vibration (122c) configuré pour lire des données de capteur de vibration d'une vanne coulissante du bac à coke dans la base de données de capteur pendant la période de temps prédéterminée et calculer une période de temps durant laquelle un vibrateur de chaque bac à coke fonctionne, générant ainsi un événement qui s'y rapporte ; et

un générateur d'événements de variation de niveau (122d) configuré pour lire des données de capteur de niveau dans la base de données de capteur pendant la période de temps prédéterminée et calculer un historique d'une variation de niveau de chaque bac à coke, générant ainsi un événement qui s'y rapporte.

6. Dispositif selon la revendication 1, dans lequel l'unité de calcul (125) comprend en outre :

une unité de calcul de schéma de chargement (125b) configurée pour calculer la quantité de chargement prédite pour chaque bac à coke sur la base d'un événement de chargement précédemment stocké ; et
une unité de calcul de schéma de déchargement (125c) configurée pour calculer la quantité de déchargement prédite pour chaque bac à coke sur la base d'un événement de déchargement précédemment stocké.

7. Dispositif selon la revendication 1, dans lequel l'unité d'analyse (126a) comprend une unité d'analyse de tendance d'état de minerai attaché (126a) configurée pour analyser un détachement, une augmentation et une décélération du minerai attaché à l'intérieur du bac à coke selon les équations d'un modèle de quantité d'augmentation de niveau de quantité de chargement et d'un nombre de modèle de quantité de diminution de niveau de déchargement issues de l'unité de dérivation de modèle de caractéristiques de variation de niveau.

8. Dispositif selon la revendication 7, dans lequel l'unité d'analyse comprend en outre une unité de prédiction de point de chargement de coke (126b) configurée pour calculer un point temporel auquel le coke à l'intérieur du bac à coke correspondant est chargé dans le haut fourneau selon les quantités de chargement et de déchargement prédites et les équations d'un modèle de quantité d'augmentation de niveau de quantité de chargement et d'un nombre de modèle de quantité de diminution de niveau de déchargement.

【FIG. 1】

【FIG. 2】

## (a)

## (b)

CHARGING GENERATED

## (c)

DISCHARGING GENERATED

## (d)

[FIG. 3a]

VOLUE AFFECTED
No. 2 COKE BIN INCREASE      TRANSPORT COKE VOLUME

02:54:40      03:05:35      03:16:30      03:27:25      03:38:20      03:49:15

COKE BIN CHARGING EVENT

No.2 COKE BIN

02:54:40      03:05:35      03:16:30      03:27:25      03:38:20      03:49:15

CHARGE
AMOUNT      No. 2 COKE BIN LEVEL CHANGE

02:54:40      03:05:35      03:16:30      03:27:25      03:38:20      03:49:15

EP 3 733 818 B1

16

【FIG. 3b】

【FIG. 4a】

COKE BIN DISCHARGE

No.2 COKE BIN

02:49:15   02:50:45   03:08:15   03:17:46   03:27:15   03:37:56

No.2 COKE BIN LEVEL CHANGE

DISCHARGE AMOUNT

02:54:40   03:05:35   03:16:30   03:27:25   03:38:20   03:49:15

【FIG. 4b】

【FIG. 5a】

【FIG. 5b】

#3
INCREASE = −0.072 + 0.889 × CHARGE AMOUNT
S = 0.627    R−Sq(adj) = 96.4%

CHARGE AMOUNT (TON)

#4
INCREASE = −0.0532 + 0.920 × CHARGE AMOUNT
S = 0.7002    R−Sq(adj) = 96.2%

CHARGE AMOUNT (TON)

【FIG. 5c】

CHARGE AMOUNT (TON)

CHARGE AMOUNT (TON)

【FIG. 6a】

#1
DECREASE = −0.669 + 0.0664 × NO. OF DISCHARGES
S = 1.741    R−Sq(adj) = 91.4%

LEVEL DECREASE (%)

NO. OF DISCHARGES

#2
DECREASE = 0.138 + 0.166 × NO. OF DISCHARGES
S = 1.428    R−Sq(adj) = 91.6%

LEVEL DECREASE (%)

NO. OF DISCHARGES

【FIG. 6b】

#3
DECREASE = −0.414 + 0.148 × NO. OF DISCHARGES
S = 1.135    R−Sq(adj) = 91.9%

NO. OF DISCHARGES

#4
DECREASE = 0.641 + 0.128 × NO. OF DISCHARGES
S = 1.547    R−Sq(adj) = 85.4%

NO. OF DISCHARGES

【FIG. 6c】

#5

DECREASE = −0.614 + 0.146 × NO. OF DISCHARGES

S = 1.032    R−Sq(adj) = 94.6%

NO. OF DISCHARGES

#6

DECREASE = 0.730 + 0.170 × NO. OF DISCHARGES

S = 1.249    R−Sq(adj) = 95.5%

NO. OF DISCHARGES

【FIG. 7a】

【FIG. 7b】

【FIG. 7c】

CHANGE

TIME

【FIG. 8】

| |
|---|
| CHARACTERISTICS MODEL EQUATION VALUE DATA BASE QUERIED<br>f_inc(x), f_dec(x),<br>CHARGE AMOUNT FOR AVE TIME RECEIVED(I)<br>DISCHARGE AMOUNT FOR AVE TIME RECEIVED(O) |

~S11

| |
|---|
| FUTURE BIN LEVEL = CURRENT BIN LEVEL<br>+ f_inc(I) − f_dec(O) |

~S12

【FIG. 9】

CHARGE AMOUNT–LEVEL INCREASE AMOUNT MODEL EQUATION
VALUE: f_inc(x) AND RECENTLY COLLECTED CHARGE AMOUNT–
LEVEL INCREASE AMOUNT K COMPARED TO MEASURE ATTACHED
ORE AMOUNT BASED ON EQUIVALENT CHARGE AMOUNT VALUE I
ABNORMAL LEVEL INCREASE AMOUNT (A) = K – f_inc(I)
ATTACHED ORE AMOUNT = A∗TOTAL AMOUNT OF COKE BIN — S21

COKE CHARGING LEVEL RECALCULATED DUE TO INCREASED
ATTACHED ORE HAZARD REFERENCE LEVEL = ORIGINAL HAZARD
REFERENCE LEVEL + $\alpha$×(100∗ATTACHED ORE AMOUNT/ENTIRE
AMOUNT OF COKE BIN)
※ $\alpha$ : REFLECTION RATIO DETERMINED BY USER — S22

BIG DATA CLUSTERING METHOD OR COOK'S DISTANCE MEASUREMENT
USED TO INVESTIGATE A NUMBER OF DISCHARGES–LEVEL DECREASE
AMOUNT DATA: PRESENCE OF DATA CORRESPONDING TO OUTLIER
VERIFIED –> ALARM GENERATED TO INFORM NARROWING OR
BLOCKING OF OPENING GATE DUE TO ATTACHED ORE — S23

【FIG. 10】

```
            ┌─────────────────────┐
            │    SENSOR DATA      │
            │    COLLECTION       │
            │    INITIATED        │
            └─────────────────────┘
                       │
    ┌──────────────────▼──────────────────┐
    │                                      │
    │          ◇─────────────────◇         │
    │   NO    ╱ COLLECTION CYCLE   ╲        │
    ◄────────◇    INITIATED?        ◇       │
    │         ╲                    ╱  S31   │
    │          ◇─────────────────◇          │
    │                  │ YES                │
    │                  ▼                    │
    │  ┌────────────────────────────────┐   │
    │  │ SENSOR DATA FROM EACH SENSOR   │───S32
    │  │         COLLECTED              │   │
    │  └────────────────────────────────┘   │
    │                  │                    │
    │                  ▼                    │
    │  ┌────────────────────────────────┐   │
    │  │   COLLECTION POINT AND VALUE IN │──S33
    │  │ MEMORY-BASE FILE STORED IN QUEUE FORM │
    │  └────────────────────────────────┘   │
    │                  │                    │
    │                  ▼                    │
    │  ┌────────────────────────────────┐   │
    │  │ COLLECTION CYCLE MEASURED AFTER SENSOR DATA │──S34
    │  │    POST-PROCESSING REQUEST     │   │
    │  └────────────────────────────────┘   │
    │                  │                    │
    └──────────────────┘────────────────────┘
```

【FIG. 11】

```
        ┌─────────────────────┐
        │     SENSOR DATA     │
        │   POST-PROCESSING   │
        │      INITIATED      │
        └─────────────────────┘
                   │
                   ▼
  NO    ◁────  POST-PROCESSED DATA EXSITING?  ────
                                              S41
                   │ YES
                   ▼
  ┌──────────────────────────────────────────┐
  │   SENSOR DATA READ IN MEMORY-BASE FILE    │──── S42
  └──────────────────────────────────────────┘
                   │
                   ▼
  ┌──────────────────────────────────────────┐
  │  SENSOR DATA CHANGED TO DATABASE QUERY    │──── S43
  └──────────────────────────────────────────┘
                   │
                   ▼
  ┌──────────────────────────────────────────┐
  │ PRESENCE OF POST-PROCESSED DATA VERIFIED  │
  │   AFTER PROCESSING REQUEST TO             │──── S44
  │   CORRESPONDING EVENT GENERATOR           │
  └──────────────────────────────────────────┘
```

【FIG. 12】

EACH EVENT
GENERATOR
INITIATED

POST-PROCESSING
REQUEST EXISTING? — S51

NO

YES

ONE EVENT DRAWN OUT FROM EVENT QUEUE TO INQUIRE
CORRESPONDING SENSOR DATA IN DATABASE — S52

TIME-SERIES HISTORY DATA GENERATED FOR
CORRESPONDING SENSOR — S53

EXISTENCE OF EVENT-PROCESSING REQUEST VERIFIED
AFTER PROCESSING REQUEST TO CHARGING EVENT
GENERATOR OR DISCHARGING EVENT GENERATOR — S54

【FIG. 13】

```
              ┌─────────────────────┐
              │   CHARGING EVENT     │
              │   GENERATION         │
              │   INITIATED          │
              └──────────┬──────────┘
                         │
        ┌────────────────┼
        │                ▼
        │   NO    ╱───────────────────╲
        ◄────────┤  EVENT PROCESSING   │
        │         ╲  REQUEST EXISTING? ╱ ── S61
        │          ╲─────────┬────────╱
        │              YES    │
        │                     ▼
        │   ┌──────────────────────────────────────────┐
        │   │ ONE EVENT DRAWN FROM VOLUME, POSITION,    │── S62
        │   │ LEVEL VARIATION EVENTS IN EVENT QUEUE     │
        │   └────────────────────┬─────────────────────┘
        │                        ▼
        │   ┌──────────────────────────────────────────┐
        │   │ ONE-TIME CHARGE AMOUNT-LEVEL INCREASE     │
        │   │ AMOUNT CALCULATED BY COMBINING VOLUME,    │── S63
        │   │ POSITION, LEVEL VARIATION EVENTS          │
        │   └────────────────────┬─────────────────────┘
        │                        ▼
        │   ┌──────────────────────────────────────────┐
        │   │ CHARGE AMOUNT-LEVEL INCREASE              │── S64
        │   │ AMOUNT EVENT STORED IN DATABASE           │
        │   └────────────────────┬─────────────────────┘
        │                        │
        └────────────────────────┘
```

【FIG. 14】

```
                    ┌─────────────────────┐
                    │  DISCHARGING EVENT  │
                    │ GENERATION INITIATED│
                    └─────────────────────┘
                               │
        ┌──────────────────────▼──────────────────────┐
        │                                              │
        │         ◇                                    │
  NO     ◇◇◇◇◇◇◇◇◇◇◇◇◇◇◇◇◇◇◇◇◇◇◇◇◇◇◇◇◇◇◇◇◇◇◇◇◇◇
◄───────◇◇      EVENT PROCESSING       ◇◇
        ◇◇      REQUEST EXISTING?       ◇◇
         ◇◇◇◇◇◇◇◇◇◇◇◇◇◇◇◇◇◇◇◇◇◇◇◇◇◇◇◇◇◇◇◇◇  S71
                     │ YES
                     ▼
        ┌──────────────────────────────────────────┐
        │   ONE EVENT DRAWN FROM VIBRATION,         │── S72
        │ LEVEL VARIATION EVENTS IN EVENT QUEUE     │
        └──────────────────────────────────────────┘
                     │
                     ▼
        ┌──────────────────────────────────────────┐
        │ ONE-TIME DISCHARGE AMOUNT-LEVEL DECREASE  │
        │      AMOUNT CALCULATED BY COMBINING       │── S73
        │     VIBRATION, LEVEL VARIATION EVENTS      │
        └──────────────────────────────────────────┘
                     │
                     ▼
        ┌──────────────────────────────────────────┐
        │   DISCHARGE AMOUNT-LEVEL DECREASE         │── S74
        │   AMOUNT EVENT STORED IN DATABASE         │
        └──────────────────────────────────────────┘
```

【FIG. 15】

CHARACTERISTICS
MODEL DERIVATION
INITIATED

NO ← RENEWAL CYCLE INITIATED? — S81

YES

TIME-SERIES DATA OF CHARGE AMOUNT-LEVEL INCREASE
AMOUNT, NUMBER OF DISCHARGES-LEVEL DECREASE AMOUNT — S82
QUERIED IN DATABASE

REGRESSION APPLIED FOR QUERIED DATA — S83

CHARGE AMOUNT-LEVEL INCREASE AMOUNT MODEL
EQUATION f_inc(x), A NUMBER OF DISCHARGES-LEVEL
DECREASE AMOUNT MODEL EQUATION f_dec(x) — S84
RESULTS DERIVED

MODEL EQUATION VALUE DERIVED IN DATABASE STORED
AS TIME-SERIES DATA — S85

RESULTS DELIVERED TO COKE CHARGING POINT PREDICTION
UNIT, ATTACHED ORE STATE TREND ANALYSIS UNIT — S86

【FIG. 16】

```
        ╭──────────────────╮
        │    CHARGING OR   │
        │   DISCHARGING    │
        │ PATTERN DERIVATION│
        │    INITIATED     │
        ╰──────────────────╯
                  │
                  ▼
   ◄──NO──◇ RENEWAL CYCLE INITIATED? ◇── S91
   │              │
   │            YES
   │              ▼
   │  ┌──────────────────────────────────┐
   │  │ CHARGE AMOUNT-LEVEL INCREASE     │
   │  │ AMOUNT OR NUMBER OFDISCHARGES-   │── S92
   │  │ LEVEL DECREASE AMOUNT EVENT      │
   │  │ QUERIED IN DATABASE              │
   │  └──────────────────────────────────┘
   │              │
   │              ▼
   │  ┌──────────────────────────────────┐
   │  │ CHARGE AMOUNT OR DISCHARGE       │
   │  │ AMOUNT FOR AVERAGE TIME          │── S93
   │  │ CALCULATED BASED ON EVENT        │
   │  └──────────────────────────────────┘
   │              │
   │              ▼
   │  ┌──────────────────────────────────┐
   │  │ RESULT DELIVERED TO COKE         │── S94
   │  │ CHARING POINT PREDICTION UNIT    │
   │  └──────────────────────────────────┘
   │              │
   └──────────────┘
```

【FIG. 17】

COKE CHARGING
POINT PREDICTION
INITIATED

RENEWAL CYCLE INITIATED? — NO
S101

YES

CHARACTERISTICS MODEL EQUATION VALUE DATA
BASE QUERIED f_inc(x), f_dec(x)
CHARGE AMOUNT FOR AVERAGE TIME RECEIVED (I)
DISCHARGE AMOUNT FOR AVERAGE TIME RECEIVED (O)
S102

FUTURE BIN LEVEL = CURRENT BIN LEVEL
+ f_inc(I) − f_dec(O)
S103

FUTURE BIN LEVEL <
HAZARD REFERENCE? — NO
S104

YES

ALARM PREDICTING BIN LEVEL DECREASE GENERATED
S105

【FIG. 18】

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018117731 A1
- KR 20040042319 A
- KR 101658180 B1
- KR 1020010064149
- KR 1020030044377
- KR 1020050064732